# EUROPÄISCHE PATENTSCHRIFT

(11) **EP 2 576 177 B1**
(45) Veröffentlichungstag und Bekanntmachung des Hinweises auf die Patenterteilung: **25.03.2015**
(21) Anmeldenummer: 11721782.8
(22) Anmeldetag: 27.05.2011
(51) Int. Cl.: B29C 45/14, B29C 45/00

(54) **VERFAHREN UND VORRICHTUNG ZUR INNENHOCHDRUCKUMFORMUNG EINES AUSGANGSHALBZEUGES**
METHOD AND DEVICE FOR HYDROFORMING A STARTING SEMI-FINISHED PRODUCT
PROCÉDÉ ET DISPOSITIF POUR L'HYDROFORMAGE D'UN SEMI-PRODUIT DE DÉPART

(30) Priorität: 28.05.2010 DE 102010017133
(43) Veröffentlichungstag der Anmeldung: 10.04.2013
(73) Patentinhaber: ACO Severin Ahlmann GmbH & Co. KG, 24768 Rendsburg (DE)
(72) Erfinder: MEINCKE, Arne, 24251 Osdorf (DE)
(74) Vertreter: Bohnenberger, Johannes
(86) Internationale Anmeldenummer: PCT/EP2011/058732
(87) Internationale Veröffentlichungsnummer: WO 2011/147969

(56) Entgegenhaltungen:
- FR-A1- 2 244 618
- JP-A- 6 008 274
- JP-A- 2000 317 975
- JP-A- 2007 307 769

## Beschreibung

Vorliegende Erfindung betrifft ein Verfahren zur Innenhochdruckumformung eines Ausgangshalbzeuges zu einem Formteil, mit folgenden Schritten: Anordnen des Halbzeuges innerhalb einer durch wenigstens zwei Matrizen gebildeten Kavität eines Formgebungswerkzeuges, Einbringen eines Spritzgussmaterials in einen Einspritzraum des Ausgangshalbzeuges derart, dass sich das Ausgangshalbzeug gegen formgebende Wandungen der Kavität verformt, wobei das Spritzgussmaterial wenigstens als statisch wirksames Stützmittel im Einspritzraum verbleibt.

Darüber hinaus betrifft die Erfindung eine Vorrichtung zur Innenhochdruckumformung eines Ausgangshalbzeuges, mit wenigstens zwei Matrizen, die miteinander eine Kavität aus formgebenden Wandungen bilden und in die ein Ausgangshalbzeug einbringbar ist, und einem Spritzbereich, über den Spritzgussmaterial unter Druck derart in einen Einspritzraum des Ausgangshalbzeuges einspritzbar ist, dass sich das Ausgangshalbzeug gegen die formgebenden Wandungen der Kavität verformt, wobei das Spritzgussmaterial wenigstens teilweise als statisch wirksames Stützmittel im Einspritzraum verbleibt.

Solche Verfahren und Vorrichtungen sind aus dem Stand der Technik bekannt und gewinnen bei der Umformtechnik zunehmend an Bedeutung zur Herstellung hohler oder gefüllter Formteile mit einer außenliegenden Beschichtung. Das Ausgangsmaterial ist im Allgemeinen ein rohrförmiges Halbzeug mit grundsätzlich beliebigem Querschnitt und beliebiger Querschnittsform, das in unterschiedlichen Arbeitsschritten in ein hohles oder ausgeformtes Formteil umgeformt wird.

Dazu wird das rohrförmige Halbzeug meist in ein zweiteiliges Formwerkzeug eingelegt, dessen Formraum bzw. Kavität, gebildet durch wenigstens zwei Matrizen, der gewünschten Außenkontur des Formteiles entspricht. Nach dem Schließen des Formgebungswerkzeuges und der Ausbildung der durch die beiden paßgenau zueinander angeordneten Matrizen gebildeten geschlossenen Kavität wird das rohrförmige Halbzeug unter Bildung eines Einspritzraumes insbesondere an den Stirnseiten abgedichtet und über eine Einspritzstelle ein Spritzgussfluid unter hohem Druck eingegeben, wodurch sich das Halbzeug verformt, gegen die Wandungen der Kavität der Matrizen anlegt, bis es seine endgültige Kontur eingenommen hat. Als Einspritzfluid wird je nach Verfahren eine Öl-Wasser-Emulsion verwendet, die nach Abdichten des Halbzeuges eingepresst wird. Es ist jedoch auch möglich, als Umformmedium bzw. Einspritzmaterial Kunststoffe zu verwenden, die nach dem Umformen als teilweise wirksames statisches Stützmittel im Einspritzraum des dann fertigen Formteils verbleiben.

Ein solches Verfahren beschreibt beispielsweise die DE 100 24 224 B4, bei der ein rohrförmiges Halbzeug in ein wenigstens zweiteiliges Formgebungswerkzeug mit einem der gewünschten Außenkontur des Formteils entsprechend ausgebildeten Kavität eingelegt wird, das rohrförmige Halbzeug druckfest abgedichtet und mittels eines Spritzgusswerkzeuges eine Polymerschmelze unter hohem Druck in den Einspritzraum eingepresst wird, wodurch sich das rohrförmige Halbzeug gegen die Wandungen der Kavität anlegt und entsprechend verformt. Anschließend wird mittels eines unter Druck zugeführten Fluides unter Bildung einer Polymer-Innenschicht am Formteil wenigstens ein Teil der zuvor eingeführten und zum Umformen verwendeten Polymerschmelze verdrängt.

Ein ähnliches Verfahren zeigt die DE 197 13 074 A1, bei der zur Herstellung eines rohrförmigen Stutzkörpers aus Metall mit einem diesen ausfüllenden, massiven Kernkörper aus Kunststoff ebenfalls ein rohrförmiges Halbzeug in einem Formgebungswerkzeug mit Kunststoffmaterial ausgespritzt und gegen Innenwandungen einer Kavität verformt wird.

Obige Verfahren erlauben zwar die Herstellung von mit Kunststoff wenigstens teilweise ausgefüllten Formteilen, sie sind jedoch hinsichtlich der zu erreichenden Bauteilgeometrie nur eingeschränkt verwendbar. Auch ist die Ausbildung von dünnbeschichteten Formteilen nur begrenzt möglich. Das Dokument FR 2 244 618 A1 offenbart ein Verfahren gemäß dem Oberbegriff des Anspruchs 1 und eine Vorrichtung gemäß dem Oberbegriff des Anspruchs 8.

Aufgabe der vorliegenden Erfindung ist es folglich, ein Verfahren und eine Vorrichtung zur Innenhochdruckumformung eines Ausgangshalbzeuges zu einem Formteil derart anzubieten, dass auf kostengünstige Weise vielseitige Formteilgeometrien und Formteilausführungsformen herstellbar sind.

Diese Aufgabe wird durch ein Verfahren zur Innenhochdruckumformung eines Ausgangshalbzeuges gemäß Patentanspruch 1 und eine Vorrichtung zur Innenhochdruckumformung eines Ausgangshalbzeuges gemäß Patentanspruch 8 gelöst.

Insbesondere wird diese Aufgabe durch ein Verfahren zur Innenhochdruckumformung eines Ausgangshalbzeuges zu einem Formteil, mit folgenden Schritten gelöst: Anordnen des Ausgangshalbzeuges innerhalb einer durch wenigstens zwei Matrizen gebildeten Kavität eines Formgebungswerkzeuges, Einbringen eines Spritzgussmaterials in einen Einspritzraum des Ausgangshalbzeuges derart, dass sich das Ausgangshalbzeug gegen formgebende Wandungen der Kavität verformt, wobei das Spritzgussmaterial wenigstens teilweise als statisch wirksames Stützmittel im Einspritzraum verbleibt, wobei das Ausgangshalbzeug aus wenigstens zwei flächigen Halbzeugelementen besteht, die unter Bildung des zwischengelagerten Einspritzraumes zwischen den beiden Matrizen eingeklemmt werden.

Darüber hinaus wird diese Aufgabe durch eine Vorrichtung zur Innenhochdruckumformung eines Ausgangshalbzeuges gelöst, mit wenigstens zwei Matrizen, die miteinander eine Kavität aus formgebenden Wandungen bilden und in die ein Ausgangshalbzeug einbringbar ist, und einem Einspritzbereich über den Spritzgussmaterial unter Druck derart in einen Einspritzraum des Ausgangshalbzeuges einspritzbar ist, dass sich das Ausgangshalbzeug gegen die formgebenden Wandungen der Kavität verformt, wobei das Spritzgussmaterial wenigstens teilweise als statisch wirksames Stützmittel im Einspritzraum verbleibt, wobei die Matrizen derart ausgebildet sind, dass sie das aus wenigstens zwei flächigen Halbzeugelementen bestehende Ausgangshalbzeug, unter Bildung des zwischengelagerten Einspritzraumes zwischen einander einklemmen.

Ein wesentlicher Punkt der Erfindung ist die Verwendung zweier flächiger Halbzeugelemente, die unter Bildung eines zwischengelagerten Einspritzraumes, also des Raumes, in den das umformende Spritzgussmaterial eingespritzt wird, als Ausgangshalbzeug zwischen den beiden Matrizen eingeklemmt werden. Im Gegensatz zu der aus dem Stand der Technik bekannten Verwendung der rohrförmigen Ausgangshalbzeuge können so sehr viel vielseitigere Formteile und insbesondere geometrische Formen hergestellt werden. Insbesondere durch die gleichbleibende Materialausführung des Ausgangshalbzeuges über die Kavität verteilt, erhält man ein Formteil mit einer sehr viel gleichmäßiger ausgebildeten Oberflächenstruktur und insbesondere Beschichtungsdicke. Zudem ist die Ausbildung von Formteilen mit Dünnbeschichtungen möglich.

Vorzugsweise werden die beiden flächigen Halbzeugelemente flächenparallel zueinander angeordnet. Es können hier also insbesondere Halbzeugelemente in Form von Folien, Blechen oder dergleichen Flächenelemente flächenparallel so aufeinander gelegt werden, dass sie einen, im unverformten Zustand sehr geringen, aber für das Einspritzen des Spritzgussmaterials ausreichenden Einspritzraum bilden. Dieser "Flächenverbund" wird zwischen den beiden Matrizen eingeklemmt und durch das Einspritzen des Spritzgussmaterials verformt.

Vorzugsweise ist wenigstens ein flächiges Halbzeugelement wenigstens teilweise als Metallfolie ausgebildet. Auf diese Weise lassen sich mit dem erfindungsgemäßen Verfahren bzw. einer entsprechend ausgebildeten Vorrichtung folglich Formteile mit einer Metallbeschichtung und insbesondere einer Dünnbeschichtung herstellen, die innenseitig eine stützende Spritzgussmaterialschicht aufweisen.

Durch das Einklemmen der Halbzeugelemente kommt es insbesondere an den Übergangsbereichen zwischen den beiden Matrizen zu einer sehr sauberen Stoßkante, die entweder nach dem Umformen in einem weiteren Arbeitsschritt, oder wie im Folgenden noch detailliert beschrieben, während des Umformvorganges ausgebildet werden kann.

Vorzugsweise sind die Matrizen und insbesondere deren Kavitäten derart ausgebildet, dass die beim Umformen resultierenden Dehnungen in den eingeklemmten Halbzeugelementen im Wesentlichen gleich sind. Dies kann beispielsweise dadurch erreicht werden, dass die Wandungsflächen der beiden Einzelkavitäten der Matrizen, die nach dem Zusammenfügen der Matrizen die Gesamtkavität bilden, im Wesentlichen gleich sind. Vorzugsweise ist also auf eine gleichmäßige Dehnung der beiden in die jeweilige Kavität der jeweiligen Matrize eingeformten Halbzeugelemente zu achten. Vorzugsweise besteht das Spritzgussmaterial aus einem thermoplastischen Polymer, auf diese Weise kann sehr einfach und kostengünstig ein sehr widerstandsfähiges und insbesondere durch die Halbzeugelemente beschichtetes Formteil hergestellt werden.

Vorzugsweise weisen die dem Einspritzraum zugewandten Elementwandungen der flächigen Halbzeugelemente wenigstens teilweise eine Haftvermittlerschicht auf, die eine Haftvermittlung zwischen dem Spritzgussmaterial und den flächigen Halbzeugelementen sicherstellt. Auf diese Weise wird ein Formbauteil gebildet, dessen im Einspritzraum verbleibendes Spritzgussmaterial zuverlässig mit den als Beschichtung fungierenden Halbzeugelementen verbunden ist. Diese Beschichtung wird vorzugsweise vor dem Anordnen der Halbzeugelemente zwischen den beiden Matrizen auf die Elementwandungen der Halbzeugelemente aufgebracht. Es ist aber auch möglich, die Beschichtung kurz vor dem Einleiten des Spritzgussmaterials in den Einspritzraum insbesondere mittels des Werkzeuges einzubringen, das später zum Einbringen des Spritzgussmaterials verwendet wird. Die Haftvermittlerschicht kann hier beispielsweise eingespritzt bzw. eingeblasen werden.

Gemäß der Erfindung weist wenigstens eine Matrize ein die Kavität wenigstens teilweise umlaufendes Prägeelement auf, das beim Umformen derart auf zwischen den Matrizen eingeklemmte Klemmbereiche der flächigen Halbzeugelemente einwirkt, dass diese im Wesentlichen beim Anlegen der Halbzeugelemente an die Wandungen der Kavität während des Umformvorganges abgetrennt werden. Ein solches Prägeelement erlaubt, wie bereits eingangs kurz erwähnt, das Umformen und "Freischneiden" des fertig umgeformten Formteiles. Während des Umformvorganges, nämlich dem Einspritzen des Spritzgussmaterials in den Einspritzraum zwischen den beiden Halbzeugelementen, drückt das oder die Prägeelemente der Matrizen so auf die Klemmbereiche der zwischen den Matrizen eingeklemmten Halbzeugelemente, dass sich dort eine Sollbruchstelle bildet, die beim Anlegen der Halbzeugelemente an die Wandungen der Kavität einreißt, so dass die eingeklemmten Bereiche von den verformten und durch das Spritzgussmaterial hinterspritzten Bereiche abgetrennt werden. Die Folge ist ein fertig verformtes Formteil, mit im Wesentlichen passgenau zueinander angeordneten Stoßkanten zwischen den beiden Halbzeugelementen.

Vorzugsweise ist das Prägeelement als scharfe Matrizenkante zwischen der Wandung der Kavität einer Matrize und deren Kontaktfläche, über die sie den Klemmbereich der flächigen Halbzeugelemente unter Zusammenwirken mit der anderen Matrize einklemmt, ausgebildet. Eine solche scharfe Matrizenkante ist also beispielsweise eine sehr genau und scharfkantig ausgebildete Übergangskante, die beim Anlegen der Halbzeugelemente an die Wandungen der Kavität der jeweiligen Matrize ein Einreißen der Halbzeugelemente verursacht.

Die zuvor beschriebenen Merkmale betreffen sowohl das erfindungsgemäße Verfahren als auch die erfindungsgemäße Vorrichtung, wobei aus Redundanzgründen hier nicht explizit auf sämtliche vorrichtungs- bzw. verfahrensspezifischen Ausführungsformen eingegangen wird. Ausdrücklich sind die vorrichtungsspezifischen Merkmale auf den erfindungsgemäßen Verfahrensablauf anwendbar und umgekehrt.

Weitere Ausführungsformen der Erfindung ergeben sich aus den Unteransprüchen.

Im Folgenden wird die Erfindung anhand von Ausführungsbeispielen beschrieben, die durch die beiden Zeichnungen näher erläutert werden. Hierbei zeigen:
- Fig. 1: eine Draufsicht auf eine erste Ausführungsform einer Vorrichtung zur Innenhochdruckumformung gemäß der Sichtlinie aus Fig. 2;
- Fig. 2: einen Querschnitt durch die Ausführungsform aus Fig. 1 gemäß der dort gezeigten Schnittführung kurz vor dem Einspritzen von Spritzgussmaterial;
- Fig. 3: einen Querschnitt durch die Ausführungsform aus Fig. 1 gemäß der dort gezeigten Schnittführung kurz vor dem Einspritzen von Spritzgussmaterial;
- Fig. 4: einen Querschnitt entsprechend Fig. 3 bei eingespritztem Spritzgussmaterial;
- Fig. 5: das mit der Vorrichtung gemäß Fig. 1 hergestellte Formteil;
- Fig. 6: einen Querschnitt durch eine Ausführungsform der erfindungsgemäßen Vorrichtung zur Innenhochdruckumformung bei eingespritztem Spritzgussmaterial; und
- Fig. 7: das mit der Vorrichtung gemäß Fig. 6 hergestellte Formteil.

Im Folgenden werden für gleiche und gleich wirkende Bauteile dieselben Bezugsziffern verwendet, wobei zur Unterscheidung bisweilen Hochindizes ihre Anwendung finden.

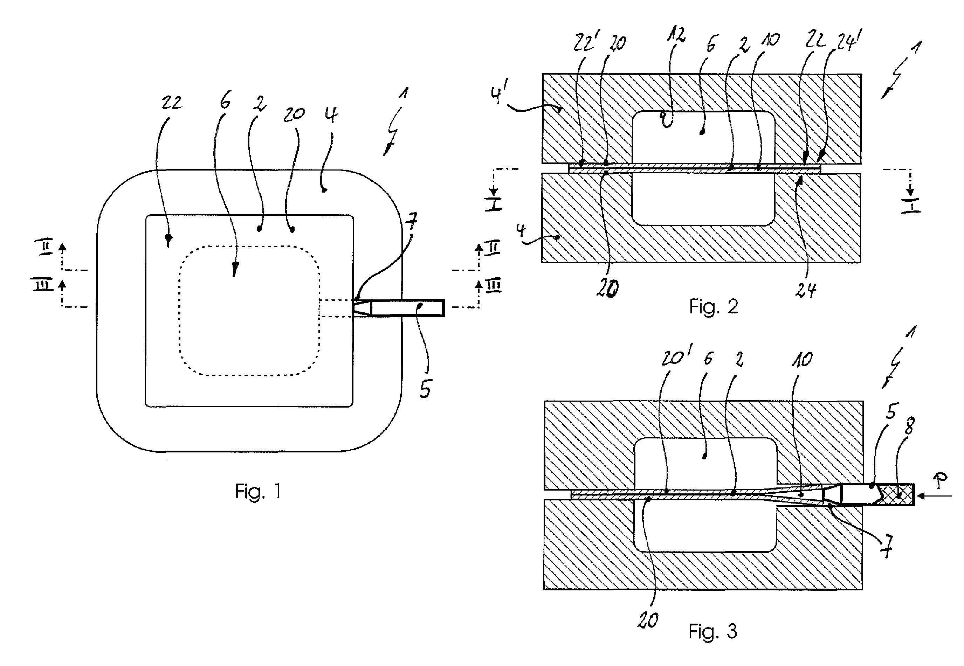

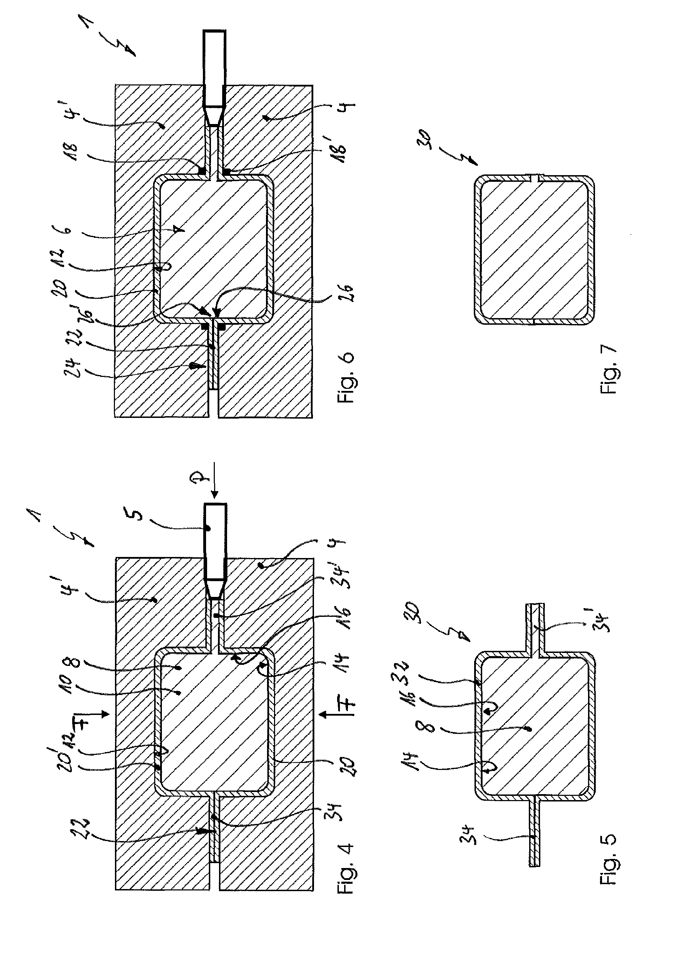

Fig. 1 zeigt eine Draufsicht auf einen Teil einer Vorrichtung 1 zur Innenhochdruckumformung. Die Fig. 2 bis 4 zeigen einen Querschnitt dieser Ausführungsform gemäß der in Fig. 1 dargestellten Schnittlinien bzw. das Verfahren zur Innenhochdruckumformung, wobei das fertige Endprodukt, nämlich das fertig umgeformte Formteil in Fig. 5 dargestellt ist.

Erkennbar ist folglich in den Fig. 1 bis 4 eine Matrize 4, auf die deckungsgleich eine weitere Matrize 4' aufgesetzt ist. Beide Matrizen zusammen bilden eine Kavität 6, deren Wandungen 12 der Umformung eines Ausgangshalbzeuges 2 dienen.

Dieses Ausgangshalbzeug 2 ist zwischen den beiden Matrizen 4 an Klemmbereichen 22 eingeklemmt, die durch Kontaktflächen 24 der Matrize 4 definiert werden.

Das Ausgangshalbzeug 2 seinerseits besteht aus zwei flächigen Halbzeugelementen 20, die flächenparallel zueinander ausgebildet sind, so dass sich in der Zwischenschicht zwischen den beiden Halbzeugelementen 20 ein Einspritzraum 10 bildet, in den, wie insbesondere in den Fig. 3 und 4 gezeigt, ein Spritzgussmaterial 8 einspritzbar ist.

Wie insbesondere in den Fig. 1, 3 und 5 ersichtlich, wird zum Einspritzen des Spritzgussmaterials ein Spritzgusswerkzeug 5 verwendet, das über eine Ausnehmung 7 in den Matrizen 4 mit den beiden flächigen Halbzeugelementen 20 so in Kontakt gebracht wird, dass das Spritzgussmaterial 8 unter einem Druck P in den Einspritzraum 10 eingespritzt werden kann.

Wie in den Fig. 3 und 4 dargestellt, dringt das Spritzgussmaterial 8 in den Einspritzraum 10 ein, wodurch sich die flächigen Halbzeugelemente 20 verformen und gegen die Wandungen 12 der Matrizen 4 anlegen. Der zum Umformen nötige Druck P ist dabei kleiner als ein außenseitiger Druck F, der die beiden Matrizen zusammen und die flächigen Halbzeugelemente 20 im Klemmbereich 22 festgeklemmt hält.

Die Matrizen 4 bzw. die Kavität 6 ist dabei so ausgeführt, dass die in den flächigen Halbzeugelementen 20 zu erwartenden Dehnungen im Wesentlichen gleich sind. Dies führt zu einem fertigen Formteil (siehe insbesondere Fig. 5) mit gleichmäßig gedehnten Halbzeugelementen 20, die bei dem derartig umgeformten Formteil 30 als Beschichtung 32 dienen. Nach dem Ausspritzen des Einspritzraumes 10 zwischen den flächigen Halbzeugelementen 20 verbleibt hier erfindungsgemäß das Einspritzmaterial im Einspritzraum 10, so dass sich ein Formteil 30 mit innenseitig angeordnetem und statisch wirksamem Einspritzmaterial ergibt.

Um ein optimales Anhaften des Spritzgussmaterials 8 an den Elementwandungen 14 der Halbzeugelemente 20 zu gewährleisten, ist an diesen eine Haftvermittlerschicht 16 angeordnet. Diese Haftvermittlerschicht 16 kann beispielsweise kurz vor dem Einbringen des Spritzgussmaterials 8 in den Einspritzraum 10 eingeblasen werden. Es ist aber auch möglich, die Haftvermittlerschicht 16 vor dem Einsetzen der Halbzeugelemente zwischen die Matrizen 4 auf die Elementwandungen 14 aufzubringen.

Nach dem fertig erfolgten Umformen wird das Formteil 30 aus der Kavität der Matrizen 4 entfernt und anschließend die verbleibenden Überstände 34, die aus den Klemmbereichen 22 (siehe Fig. 4) resultieren, entfernt, beispielsweise abgeschnitten.

An Stelle eines vollständigen Verbleibens des Spritzgussmateriales 8 im Einspritzraum 10 ist es auch möglich, einen Teil des, möglichst dann noch nicht ausgehärteten Spritzgussmaterials wieder aus dem Einspritzraum 10 zu entfernen, so dass ein Hohlkörperbauteil mit einer innenliegenden Spritzgussschicht 8 und einer außenliegenden Beschichtung 32 gebildet wird.

Fig. 6 zeigt eine Ausführungsform der erfindungsgemäßen Vorrichtung 1 zur Innenhochdruckumformung, die sich von der zuvor beschriebenen Ausführungsform gemäß den Fig. 1 bis 4 lediglich dadurch unterscheidet, dass die Matrizen 4 jeweils ein die Kavität 6 umlaufendes Prägeelement 18 aufweisen, das während des Umformvorganges derart auf die zwischen den Matrizen an den Kontaktflächen 24 eingeklemmten Halbzeugelemente 20 bzw. deren Klemmbereiche 22 einwirkt, dass diese beim Anlegen an die Wandung 12 der Kavität 6, also während des Umformens, die Klemmbereiche 22 abtrennen. Wie in Fig. 7 dargestellt, führt dies nach fertiger Umformung zu einem Formteil 30, das im Wesentlichen fabrikationsfertig und ohne nötige Nachbehandlung aus der Kavität 6 der Matrizen 4 entnommen werden kann.

Bei der in Fig. 6 dargestellten Ausführungsform ist das Prägeelement als eine scharfe Matrizenkante zwischen der Innenwandung 12 der Kavität 6 und der Kontaktfläche 24 der jeweiligen Matrize 4 ausgeführt. Die Matrize 4 ist dabei so ausgebildet, dass diese scharfe Kante beim Anlegen der flächigen Halbzeugelemente 20 an die Innenwandung 12 der Kavität 6 zu einer Sollbruch- bzw. Sollrissstelle 26 führt, die ein Abtrennen der Klemmbereiche 22 vom fertig ausgeformten Formteil 30 während des Umformprozesses bedingt.

Natürlich ist es an Stelle der Ausbildung einer scharfen Matrizenkante auch möglich, das Prägeelement 18 als entsprechend eine Sollrissstelle 26 definierenden Vorsprung und insbesondere als umlaufenden Pressfortsatz auszuführen.

### Bezugszeichen

- 1: Vorrichtung
- 2: Ausgangshalbzeug
- 4: Matrize
- 5: Spritzgusswerkzeug
- 6: Kavität
- 7: Ausnehmung
- 8: Spritzgussmaterial
- 10: Einspritzraum
- 12: Wandung
- 14: Elementwandung
- 16: Haftvermittlerschicht
- 18: Prägeelement
- 20: flächiges Halbzeugelement
- 22: Klemmbereich
- 24: Kontaktfläche
- 26: Sollrissstelle
- 30: Formteil
- 32: Beschichtung
- 34: Überstand

## Patentansprüche

1. Verfahren zur Innenhochdruckumformung eines Ausgangshalbzeuges (2) zu einem Formteil, mit folgenden Schritten:
- Anordnen des Ausgangshalbzeuges (2) innerhalb einer durch wenigstens zwei Matrizen (4) gebildeten Kavität (6) eines Formgebungswerkzeuges (1),
- Einbringen eines Spritzgussmaterials (8) in einen Einspritzraum (10) des Ausgangshalbzeuges (2) derart, dass sich das Ausgangshalbzeug (2) gegen formgebende Wandungen (12) der Kavität (6) verformt, wobei das Spritzgussmaterial (8) wenigstens teilweise als statisch wirksames Stützmittel im Einspritzraum (10) verbleibt,
wobei
das Ausgangshalbzeug (2) aus wenigstens zwei flächigen Halbzeugelementen (20) besteht, die unter Bildung des zwischengelagerten Einspritzraumes (10) zwischen den beiden Matrizen (4) eingeklemmt werden,
**dadurch gekennzeichnet,** dass wenigstens eine Matrize (4) ein die Kavität (6) wenigstens teilweise umlaufendes Prägeelement (18) aufweist, dass beim Umformen derart auf zwischen den Matrizen (4) eingeklemmte Klemmbereiche (22) der flächigen Halbzeugelemente (20) einwirkt, dass diese im Wesentlichen beim Anlegen der Halbzeugelemente (20) an die Wandungen (12) der Kavität (6) während des Umformvorganges abgetrennt werden.

2. Verfahren nach Anspruch 1,
**dadurch gekennzeichnet ,** dass
die beiden flächigen Halbzeugelemente (20) flächenparallel zueinander angeordnet werden.

3. Verfahren nach Anspruch 1 oder 2,
**dadurch gekennzeichnet,** dass
wenigstens ein flächiges Halbzeugelement (2) wenigstens teilweise als Metallfolie ausgebildet ist.

4. Verfahren nach einem der vorhergehenden Ansprüche,
**dadurch gekennzeichnet**, dass
die Matrizen (4) und insbesondere deren Kavitäten (6) derart ausgebildet sind, dass die beim Umformen resultierenden Dehnungen in den eingeklemmten Halbzeugelementen (20) im Wesentlichen gleich sind.

5. Verfahren nach einem der vorhergehenden Ansprüche,
**dadurch gekennzeichnet,** dass
als Spritzgussmaterial (8) ein thermoplastisches Polymer verwendet wird.

6. Verfahren nach einem der vorhergehenden Ansprüche,
**dadurch gekennzeichnet,** dass
die dem Einspritzraum (10) zugewandten Elementwandungen (14) der flächigen Halbzeugelemente (20) wenigstens teilweise mit einer Haftvermittlerschicht (16) versehen werden, die eine Haftvermittlung zwischen dem Spritzgussmaterial (8) und den flächigen Halbzeugelementen (20) sicher stellt.

7. Verfahren nach einem der vorhergehenden Ansprüche,
**dadurch gekennzeichnet,** dass
das Prägeelement (18) als scharfe Matrizenkante zwischen der Wandung (12) der Kavität (6) einer Matrize (4) und deren Kontaktfläche (24), über die sie den Klemmbereich (22) der flächigen Halbzeugelemente (20) unter Zusammenwirken mit der anderen Matrize (4') einklemmt, ausgebildet ist.

8. Vorrichtung zur Innenhochdruckumformung eines Ausgangshalbzeuges (2), mit
wenigstens zwei Matrizen (4), die miteinander eine Kavität (6) aus formgebenden Wandungen (12) bilden und in die ein Ausgangshalbzeug (2) einbringbar ist, und einem Einspritzbereich über den Spritzgussmaterial (8) unter Druck derart in einen Einspritzraum (10) des Ausgangshalbzeuges (2) einspritzbar ist, dass sich das Ausgangshalbzeug (2) gegen die formgebenden Wandungen (12) der Kavität (6) verformt, wobei das Spritzgussmaterial (8) wenigstens teilweise als statisch wirksames Stützmittel im Einspritzraum verbleibt,
wobei
die Matrizen (4) derart ausgebildet sind, dass sie das aus wenigstens zwei flächigen Halbzeugelementen (20) bestehende Ausgangshalbzeug (2) unter Bildung des zwischengelagerten Einspritzraumes (10) zwischen einander einklemmen,
**dadurch gekennzeichnet,** dass
wenigstens eine Matrize (4) ein die Kavität (6) wenigstens teilweise umlaufendes Prägeelement (18) derart aufweist, dass es beim Umformen auf zwischen den Matrizen (4) eingeklemmte Klemmbereiche (22) der flächigen Halbzeugelemente (20) so einwirkt, so dass diese im Wesentlichen beim Anlegen der Halbzeugelemente (20) an die Wandungen (12) der Kavität (6) während des Umformvorganges abgetrennt werden.

## Claims

1. Method for the internal high-pressure forming of a semi-finished starting product (2) to form a shaped article, having the following steps:
- arrangement of the semi-finished starting product (2) inside a cavity (6) of a shaping tool (1) formed by at least two moulds (4),
- introduction of an injection-moulding material (8) into an injection space (10) of the semi-finished starting product (2) in such a way that the semi-finished starting product (2) is deformed against shaping walls (12) of the cavity (6), at least some of the injection-moulding material (8) remaining in the injection space (10) as statically effective support means,
wherein
the semi-finished starting product (2) consists of at least two planar semi-finished elements (20) which are clamped between the two moulds (4) to form the intermediate injection space (10),
**characterised in that**
at least one mould (4) has an imprinting element (18) running around at least a portion of the cavity (6), which imprinting element, during forming, acts on clamping regions (22) of the planar semi-finished elements (20) that are clamped between the moulds (4) in such a way that those clamping regions are substantially detached when the semi-finished elements (20) are applied to the walls (12) of the cavity (6) during the forming operation.

2. Method according to claim 1,
**characterised in that**
the two planar semi-finished elements (20) are arranged with their planar surfaces parallel to one another.

3. Method according to claim 1 or 2,
**characterised in that**
at least one planar semi-finished element (2) is at least partly in the form of a metal foil.

4. Method according to any one of the preceding claims,
**characterised in that**
the moulds (4) and particularly the cavities (6) thereof are constructed in such a way that the expansion resulting from forming is substantially equal in the clamped semi-finished products (20).

5. Method according to any one of the preceding claims,
**characterised in that**
a thermoplastic polymer is used as injection-moulding material (8).

6. Method according to any one of the preceding claims,
**characterised in that**
those element walls (14) of the planar semi-finished elements (20) which face the injection space (10) are at least in part provided with an adhesion-promoter layer (16) which ensures that adhesion is promoted between the injection-moulding material (8) and the planar semi-finished elements (20).

7. Method according to any one of the preceding claims,
**characterised in that**
the imprinting element (18) is in the form of a sharp mould edge between the wall (12) of the cavity (6) of a mould (4) and the contact face (24) thereof, by means of which, in co-operation with the other mould (4'), it clamps the clamping region (22) of the planar semi-finished elements (2).

8. Device for the internal high-pressure forming of a semi-finished starting product (2), having
at least two moulds (4) which together form a cavity (6) comprising shaping walls (12) and into which a semi-finished starting product (2) can be introduced, and an injection region *via* which injection-moulding material (8) can be injected under pressure into an injection space (10) of the semi-finished starting product (2) in such a way that the semi-finished starting product (2) is deformed against the shaping walls (12) of the cavity (6), at least some of the injection-moulding material (8) remaining in the injection space as statically effective support means,
wherein
the moulds (4) are constructed in such a way that they clamp between them the semi-finished starting product (2), which consists of at least two planar semi-finished elements (20), to form the intermediate injection space (10),
**characterised in that**
at least one mould (4) has an imprinting element (18) running around at least a portion of the cavity (6), which imprinting element, during forming, acts on clamping regions (22) of the planar semi-finished elements (20) that are clamped between the moulds (4) in such a way that those clamping regions are substantially detached when the semi-finished elements (20) are applied to the walls (12) of the cavity (6) during the forming operation.

## Revendications

1. Procédé pour l'hydroformage d'un semi-produit de départ (2) en une pièce moulée, comprenant les étapes suivantes:
- disposer le semi-produit de départ (2) à l'intérieur d'une cavité (6) d'un outil de formage (1) formée par au moins deux matrices (4),
- introduire une matière de moulage par injection (8) dans une chambre d'injection (10) du semi-produit de départ (2), de telle manière que le semi-produit de départ (2) se déforme contre les parois de formage (12) de la cavité (6), la matière de moulage par injection (8) restant au moins partiellement dans la chambre d'injection (10) comme moyen de soutien actif statiquement,
dans lequel le semi-produit de départ (2) se compose d'au moins deux éléments de semi-produit plats (20) qui sont serrés entre les deux matrices (4) en formant la chambre d'injection intermédiaire (10),
**caractérisé en ce qu'**au moins une matrice (4) présente un élément d'estampage (18) entourant au moins partiellement la cavité (6) qui agit lors de la déformation sur des zones de serrage (22) des éléments de semi-produit plats (20) serrées entre les matrices (4), de telle manière que ceux-ci soient essentiellement séparés lors de l'application des éléments de semi-produit (20) sur les parois (12) de la cavité (6) pendant l'opération de déformation.

2. Procédé selon la revendication 1, **caractérisé en ce que** l'on dispose les deux éléments de semi-produit plats (20) à plat parallèlement l'un à l'autre.

3. Procédé selon la revendication 1 ou 2, **caractérisé en ce qu'**au moins un élément de semi-produit plat (20) est formé au moins partiellement par une feuille métallique.

4. Procédé selon l'une quelconque des revendications précédentes, **caractérisé en ce que** les matrices (4) et, en particulier, leurs cavités (6) sont configurées de telle manière que les allongements produits lors de la déformation dans les éléments de semi-produit serrés (20) sont essentiellement égaux.

5. Procédé selon l'une quelconque des revendications précédentes, **caractérisé en ce que** l'on utilise un polymère thermoplastique comme matière de moulage par injection (8).

6. Procédé selon l'une quelconque des revendications précédentes, **caractérisé en ce que** les parois d'élément (14) des éléments de semi-produit plats (20) tournées vers la chambre d'injection (10) sont munies au moins en partie d'une couche d'agent adhésif (16) qui assure une adhérence entre la matière de moulage par injection (8) et les éléments de semi-produit plats (20).

7. Procédé selon l'une quelconque des revendications précédentes, **caractérisé en ce que** l'élément d'estampage (18) est réalisé sous la forme d'une arête vive de matrice entre la paroi (12) de la cavité (6) d'une matrice (4) et sa face de contact (24) par laquelle elle serre la zone de serrage (22) des éléments de semi-produit plats (20) en coopérant avec l'autre matrice (4).

8. Dispositif pour l'hydroformage d'un semi-produit de départ (2), avec au moins deux matrices (4) qui forment l'une avec l'autre une cavité (6) composée de parois de formage (12) et dans lesquelles un semi-produit de départ (2) peut être introduit et avec une zone d'injection par laquelle une matière de moulage par injection (8) peut être injectée sous pression dans une chambre d'injection (10) du semi-produit de départ (2), de telle manière que le semi-produit de départ (2) se déforme contre les parois de formage (12) de la cavité (6),
dans lequel la matière de moulage par injection (8) reste au moins partiellement dans la chambre d'injection comme un moyen de soutien actif statiquement,
dans lequel les matrices (4) sont configurées de telle manière qu'elles serrent entre elles le semi-produit de départ (2) composé d'au moins deux éléments de semi-produit plats (20) en formant la chambre d'injection intermédiaire (10), **caractérisé en ce qu'**au moins une matrice (4) présente un élément d'estampage (18) entourant au moins partiellement la cavité (6), de telle manière qu'il agisse lors de là déformation sur des zones de serrage (22) des éléments de semi-produit plats (20) serrées entre les matrices (4), de telle manière que ceux-ci soient essentiellement séparés lors de l'application des éléments de semi-produit (20) sur les parois (12) de la cavité (6) pendant l'opération de déformation.
